# EUROPEAN PATENT SPECIFICATION

(11) **EP 1 210 260 B1**
(45) Date of publication and mention of the grant of the patent: **02.05.2003**
(21) Application number: 00949484.0
(22) Date of filing: 09.08.2000
(51) Int. Cl.: B62J 9/00

(54) **SUITCASE FOR MOTORCYCLES, OR SIMILAR, WITH DOUBLE FUNCTION LOCKING DEVICE, AND REFERRING LOCKING METHOD**
KOFFER FÜR MOTORRÄDER, ODER ÄHNLICHES, MIT DOPPELFUNKTIONSVERRIEGELUNGSEINRICHTUNG, UND ENTSPRECHENDES VERRIEGELUNGSVERFAHREN
MALLETTE POUR MOTOCYCLE, OU VEHICULE SIMILAIRE, AVEC DISPOSITIF DE VERROUILLAGE A DOUBLE FONCTION, ET SON PROCEDE DE VERROUILLAGE

(30) Priority: 13.08.1999 IT PI990050; 19.06.2000 IT PI200020 U
(43) Date of publication of application: 05.06.2002
(73) Proprietor: Ricci, Livio, 56010 Vicopisano (IT); Ricci, Paolo, 56010 Vicopisano (IT)
(72) Inventor: Ricci, Livio, 56010 Vicopisano (IT); Ricci, Paolo, 56010 Vicopisano (IT)
(74) Representative: Gritschneder, Martin, Dipl.-Phys.
(86) International application number: EP0007878
(87) International publication number: WO01012496

(56) References cited:
- EP-A- 0 517 265
- EP-A- 0 709 282
- DE-A- 4 230 972

## Description

The following invention refers to a suitcase for motorcycles, or similar, provided with a double purpose locking device which assures both the closing of the suitcase and its locking to the vehicle.

The invention refers also to a method to open a suitcase for motorcycles and to release it from the vehicle by one single security device.

As known, glove compartment suitcases usually put on the back of motorcycles, or similar, are more and more employed, due, also, to the introduction of new legal regulations which bind to use crash helmets to protect all riders of said vehicles.

Many specific suitcases have been developed and introduced on the market, for all ranges of two-wheels vehicles, that is motorcycles, scooters, etc, each of them with its own capacities and functions.

There are for example, suitcases of limited capacity, employed on mopeds, or low powered vehicles, which are generally fixed to respective supporting plates, integral to the vehicle body, by screw means accessible only from the inside of the suitcase. In such situation, presumably, the suitcase becomes a fixed accessory of the vehicle.

On the contrary, in case the use of it includes frequent installations and removals, the suitcase should show interesting and more suitable features of transportability capacity and aesthetic peculiarities.

In this case, it is also provided with faster and more immediate means for connecting to the vehicle; said means can further guarantee the necessary security level against illicit removals.

In fact, in known arrangements, such connecting means are generally protected by key type security means, and in particular, most recent solutions allows operating on the same security means employed for the usual opening and closing of the suitcase, offering so a higher level of simplicity and efficacy.

In these last arrangements, the release of the suitcase from the supporting plate is possible by a pression which unhooks said connecting means, which usually keep the suitcase fixed to above plate by the help of specific elastic means.

It is to notice that the pression can be effected directly on special knobs, which are however accessible or movable after turning the key in the correct position, as shown in EP 0 517 265 and IT 1 227 880. To open the suitcase, it is sufficient to turn the same key in opposite direction, or to release special joint means of its cover after turning the key.

With this arrangements, the advantage to open the suitcase and to release it by means of the same key is often associated to a certain structural sophistication of the double function adopted device, and to a certain intricacy to open and release the suitcase, for which it is necessary the use of both hands to make it correctly.

One aim of the present invention to propose a suitcase for motorcycles, or similar vehicles, provided with a double function device, for closing and fixing it to the vehicle, of high simplicity and reliability.

Another aim of the invention is to propose a rational and efficient method to open a suitcase for motorcycles and to release it through one single security device.

Further aim of the invention is to propose a suitcase for motorcycles, or similar, provided with a double function device by which the operating ways concerning the two functions may be clearly distinguished, avoiding so to unintentionally release the suitcase from the vehicle instead of opening it, and by which, furthermore, we can get a high security level against possible removal attempts.

Said aims are reached by a suitcase for motorcycles, or similar vehicles, comprising an inferior fixed part, a superior movable part coupled by hinge means to the fixed one, key type security means bound to said fixed part on the opposite side of said hinge means, wherein two levers, shaped as an "L", are jointed, in a rotating way to said fixed part, and are respectively located above said security means and under said security means, said two levers comprising, at one end, hooks which bind the suitcase, respectively, to the supporting plate and to a member integral to said superior movable part, the other ends being kept in contact, by elastic means, with a cam integral to said key type security means, said cam being rotatable from a central position, corresponding to the closing and locking of the suitcase, to two opposite positions which can produce the opening of the superior part of the suitcase, or the release of it from the supporting plate of the vehicle.

A mechanical stop element is provided to prevent one of said rotations, said element being engaged or disengaged through means located inside the suitcase.

A method to open the suitcase for motorcycles or to release it from the vehicle through one single security device comprises a phase consisting of turning the key in one estabilished direction to open the suitcase, a phase consisting of turning the key in the opposite direction to release it from the vehicle, one of such phases being preceded by a phase of moving said key in axial sense or by a phase of disengaging a mechanical stop which is placed inside said suitcase to impede said rotation .

It has to be noticed that the possible axial movement of the key has only the role of marking the kind of operation to effect.

The advantages of above suitcase and associated opening and release method are clear; they are mainly due to the simple structural lay out of the locking device with double function of the present invention.

However, for a better understanding of the structural characteristics and use of the suitcase of the invention, this will now be described by way of embodiment examples, with reference to the accompanying drawings, in which:
- figure 1 is a schematic view of the profile, in partial section, of a suitcase for motorcycles according; to the present invention;
- figure 2 is a view, in section, of one portion of the suitcase of fig.1, in one determined operative configuration:

- figure 3 is one further view, in section, of the portion of the suitcase of fig.2, in one different configuration;
- figure 4 is a view, in partial section, obtained through the section line IV-IV of fig.3
- figure 5 is a view, in section, of one portion of a different embodiment of the suitcase of the invention;
- figure 6 is an interior top view of the portion of the suitcase of fig.5.

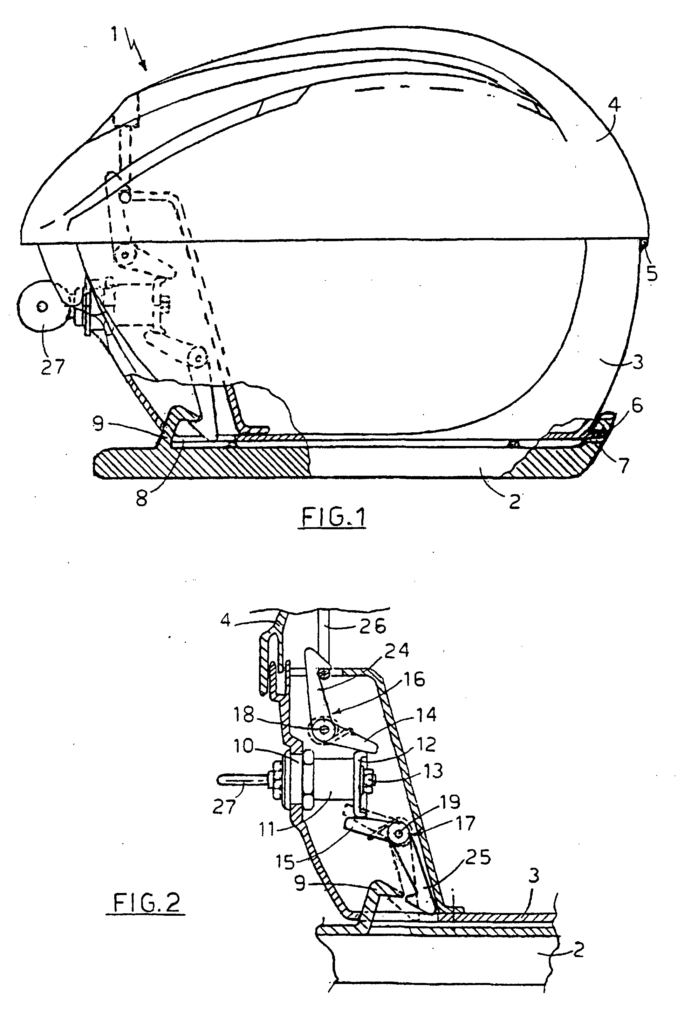

Referring now to fig.1, it is indicated with 1 a suitcase for motorcycles, or similar vehicles, connected, in a removable way, to a supporting plate. 2, jointed to the vehicle.

The suitcase, 1, comprises one inferior fixed part, 3, and one superior movable part, 4, coupled to the fixed one, 3, by hinge means, 5.

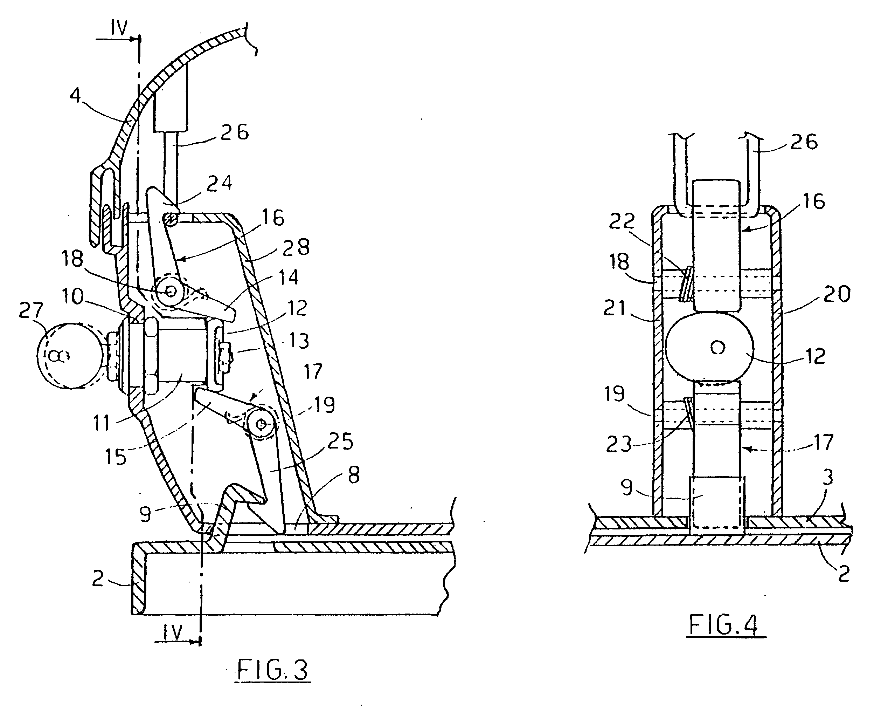

The inferior part 3 is provided with one or more back protruding portions 6, which fit with holes, 7, of the supporting plate 2, and, on the opposite side, it is provided with an opening, 8, in which a profiled hook, 9, of the plate 2 is insertable. In a further opening, 10, on the front of the fixed part 3, there is a security locking device, 11, which rotates a shaped cam, 12, shown in figure 4, fixed to the movable part of the locking device, 11, by screw means, 13.

Pressed to said shaped cam, 12, we can find the ends 14, 15, of two levers 16,17, shaped as an "L", turning around two hubs 18,19, supported by two internal walls 20,21, of the fixed part 3. Said levers 16,17, are in contact with the cam, 12, thanks to two respective elastic means 22,23, which are working between the levers and the corresponding hubs.

As we can see, the other two ends 24, 25, of said levers 16,17, are shaped so that they can bound respectively with a "U" member, 26, integral with the movable superior part 4 of the suitcase, and with the profiled hook, 9, of the supporting plate, 2.

An auxiliary internal wall 28, together with the other walls, 20, 21, protects and separates the above members from the useful space of the suitcase.

As per figures 3 and 4, the two ends 24, 25, of the shaped levers 16, 17, are bound with the corresponding members of the cover of the suitcase and of the plate when the shaped cam 12 is in the neutral position shown in said figures, that is the vertical position of the key 27. Such position is corresponding both to the closing of the suitcase and to its locking to the vehicle.

An anticlockwise rotation of 90 degrees, in the plane of fig. 4, brings the cam 12 in the position shown in figure 2. Following to such rotation, the end part, 15, of the lever, 17, goes down, so we have the release of the other end, 25, of the same lever from the hook, 9.

Said rotation, thanks to the special profile of the cam 12, does not cause any movement of the lever 16, so it is assured that the suitcase remains closed during the disengaging from the supporting plate 2.

It is clear that the rotation in opposite sense of the cam, in respect of the neutral position, causes the release of the lever 16 from the member 26 which is integral with the superior part of the suitcase, while the position of the lever 17 remains unchanged, therefore, in this case, we have just the opening of the suitcase, without its release from the vehicle.

So the different functions of opening and release of the suitcase are very easy to obtain with the above disclosed embodiment.

Moreover, in order to avoid the case that one of the two operations is effected unintentionally, the security means, 11, can assure, according to known technics, that one of the two rotations from the neutral position can be done only after the movement in axial sense of the key, according to precise and limited extensions, which amount can be perceived by comparing, in fig. 3, the dotted position of the key 27 in respect to the marked position.

So, adopting the above solution it is possible to define a method of opening and/or release of the suitcase from the vehicle by one single key security device, that comprises a phase of rotation of the key in one estabilished direction to open it, and a phase of rotation of said key in opposite direction to release it from the vehicle, one of said phases being anticipated by a phase of movement of the key in axial sense. in order to distinguish the kind of operation to effect.

In order to avoid that someone may unintenionally release the suitcase from the vehicle, instead of opening it, or vice versa, according to the above described solution, the rotation of the key in the direction useful to get the release of the suitcase can be done only after a small movement of the key main body, in axial sense, towards the interior of the suitcase, without causing any displacement of the shaped cam, L2, and, the less, of the "L" levers, 16, 17, moved by said cam.

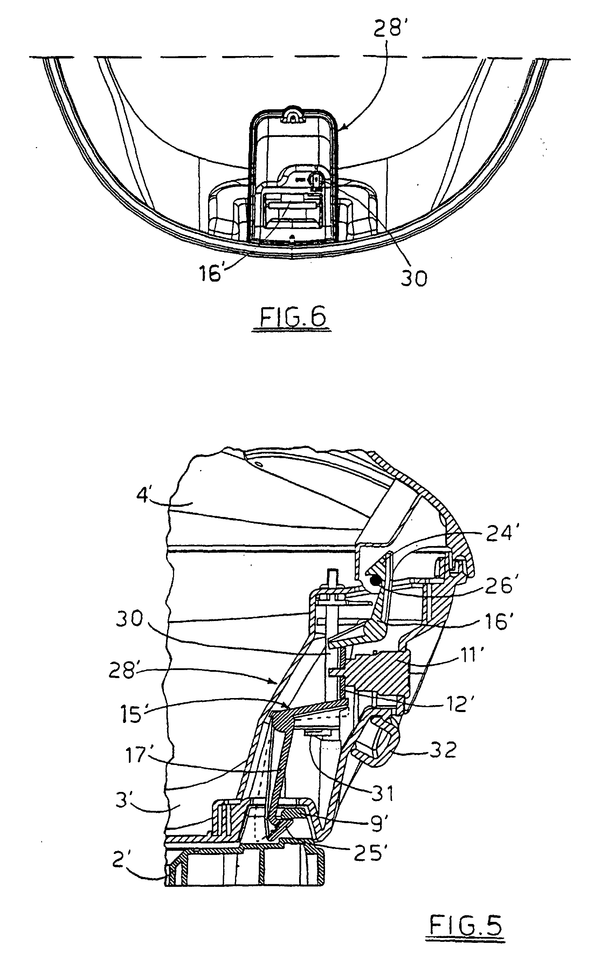

A further solution to the above problem is shown in figs. 5 and 6, which refer to a different embodiment of the invention.

In these figures we note, in fact, that inside the box, 28', located in the inferior fixed part 3', of the suitcase there is a vertical thin rod, 30, placed laterally in respect of the vertical median plane; said rod being rotatable around its axis and being provided with a lug, 31.

When said rod 30, is in one of the two terminal positions of its rotation, as per fig.5, the lug, 31, is situated exactly below the horizontal branch of the "L" lever, 17'. in contact of this one. impeding so any rotation of the lever in the vertical plane; considering that said lever is dedicated to the locking of the suitcase to the supporting plate, 2', we have, therefore, a stable locking condition of the suitcase to the vehicle.

When, on the contrary, the vertical thin rod, 30, is put in the other position, rotated of 90 degrees in respect of the above one, the lug, 31, does not interfere at all with any possible rotatory movement of lever 17' around its horizontal pivot; therefore, said lever can move to the release position, shown, in dotted lines, in fig.6, in consequence of a proper working of the shaped cam, 12', through key means 11'.

We can just see that in fig.6 lug, 31, is located parallel to said horizontal branch of lever 17' and does not interfere with it.

It has to be noticed that, thanks to the special shape of the twin dumped cam, 12', we can have, according to known technics, that the key rotation useful to the release of the suitcase may be 90 - 100 degrees, from the neutral position of fig.3, and the key rotation in the opposite sense, useful to the opening of the suitcase, may be 45 degrees approximately. That is, obviously, an important distinguishing factor of the two functions of the locking device of the disclosed suitcase.

So, in this second embodiment of the invention, we have that, when the suitcase is bound to the supporting plate, 2', the usual opening of the same suitcase is achieved through a simple clockwise rotation, of about 45 degrees, of the key inserted in the safety lock, 11'; whilst, when it is desired to take the suitcase away from the vehicle, it has preliminary to put the internal rod, 30, in the proper position, indicated just by word "Open" in fig.5, and, then, it has to rotate the key inserted in safety lock, 11', in anticlockwise direction, for an angle of about 90 - 100 degrees.

By this last rotation the shaped cam, 12', is moved to the position which causes the displacement of the lever end, 15', towards the bottom and, consequently, the disengaging of the other end, 25', of the same lever from the profiled hook 9'.

As already pointed out with regard to the former embodiment, this last rotation, thanks to the special shape of cam, 12', does not cause any movement of the other lever, 16'; therefore the end 24' of this lever continues to be engaged with the "U" member, 26', which is integral with the superior part, 4', of the suitcase, having so the result that during the release of the suitcase from the supporting plate, 2', it continues to stay closed.

In the embodiment of fig 6, we can note, furthermore, the suitcase-handle, 32, useful to the carrying of the suitcase released from the vehicle, said handle being located, when not in use; in a hollow of the suitcase surface, just below the key means, 11'.

In the embodiment of figs. 3, 4 and in the embodiment of figs. 5, 6, the operations of closing and locking, thanks to the particular form of the two ends 24, 25 of the levers, 16,17 and thanks to elastic means 22, 23, are completely automatic; in fact, for closing it is just necessary to press a bit the superior movable part 4 to the inferior fixed one 3, while to lock the suitcase to the vehicle it is just necessary to press a bit the fixed part 3 to the plate 2, after inserting the protruding portion 6 in the corresponding hole 7 of said plate 2.

It is obvious that the clear and immediate advantages of the suitcase according to the invention remain the same, also if some changes are effected on the disclosed embodiments.

It could be, for instance, that the conformation of the member 26 integral to the cover 4 of the suitcase is different, as long as it remains compatible with the shape and the position of the lever 16, which has to bound it in closing position. The same is for the shaped hook 9, 9', compatible with the plate 2.

The elastic means 22, 23, which work on the levers, 16, 17, can be different from the ones schematically shown in fig.4.

Also the capacity and the conformation of the suitcase can be changed from the ones designed in the appended drawings.

Moreover for its structural simplicity and cheapness, the disclosed solution can be applied also to suitcases of reduced dimensions and price, which, usually, are stable fixed to the vehicle.

In reference to the method of opening and/or release of the suitcase from the vehicle, according to the first embodiment of the invention, the axial movement of the key 27 can be of different extension from the one indicated in fig. 3, and in the meantime, the cam 12 can move accordingly, without interfering with the functionality of the device.

About the second embodiment of the invention some changes. may regard the material of the mechanical stop, its manufacturing process or assembly, the ways of reaching it, from the interior of the suitcase or by external means; also the contour of the key actuated cam may be altered in order to have different angular displacement of the levers in respect of the ones shown in the drawings.

These and further changements can be made always within the limits defined by the following claims.

## Claims

1. Suitcase (1) for motorcycles, or similar vehicles, comprising an inferior fixed part (3), a superior movable part (4) coupled by hinge means (5) to the fixed one (3), key type security means (11) bound to said fixed part on the opposite side of said hinge means, and a first lever (17) and a second lever (16) shaped as an "L" jointed in a rotating way to said fixed part (3) **characterized in that** the first lever (17) is located under said security means and the second lever (16) above said security means (11), each lever comprising at one end (24, 25) a hook, the hook of the first lever (17) being adapted to connect the suitcase to a supporting plate (2) for attachment and the hook of the second lever (16) being adapted to connect the inferior fixed part (3) to a member (26) integral to said superior movable part (4) for closing the suitcase, the other end (14, 15) of said levers being kept in contact, by elastic means (22, 23), with a cam (12) integral to said key type security means, said cam (12) turning from a neutral position in two symmetrically opposite positions which can produce the opening of the superior part (4) of the suitcase, or the release of the suitcase from its supporting plate (2).

2. Suitcase (1) for motorcycles, or similar vehicles, as claimed in the preceding claim **characterized in that** the two levers (16, 17) are jointed, in turning way, to horizontal hubs (18,19), such hubs being on opposite plane in respect to the shaped cam (12), and being supported at their ends by inner walls (20, 21) of the fixed part (3) of the suitcase.

3. Suitcase (1) for motorcycles, or similar vehicles, as claimed in claim 1 or 2, **characterized in that** said shaped cam (12) is fixed to the movable part of said security means (11) by screw means (13).

4. Suitcase (1) for motorcycles, or similar vehicles, as claimed in any preceding claim, **characterized by** the fact that the hook of the first lever (17) is adapted to engage a profiled hook (9) integral with said supporting plate (2), said hook (9) being insertable in an aperture (8) on the ground of said fixed part (3) of the suitcase.

5. Suitcase (1) for motorcycles. or similar vehicles, as claimed in any preceding claim, **characterized by** the fact that the hook of the second lever (16) is adapted to engage with a member (26), shaped as a "U", which is internally integral to said superior movable part (4) of the suitcase.

6. Suitcase (1) for motorcycles, or similar vehicles, as claimed in any preceding claim, **characterized by** comprising a mechanical stop element to prevent one of the rotations of said cam (12'), said element being engaged or disengaged through means located inside the suitcase.

7. Suitcase (1) for motorcycles, or similar vehicles, as claimed in claim 6, **characterized in that** said mechanical stop (31) is adapted to impede the rotation of said lever (17') dedicated to interact with said plate 2, connecting the suitcase to the vehicle.

8. Suitcase (1) for motorcycles, or similar vehicles, as claimed in claim 6 or 7, **characterized in that** said, mechanical stop (31) comprises a vertical rod (30), rotatable around its axis, said rod being provided with a horizontal lug, 31, and being displaceable, by hand, between two positions rotated, one each other, of an angle of 90 degrees, one of said positions corresponding to an interfering condition of said lug in respect of a horizontal branch, 15', of said lever, 17', said lug being located in contact of the inferior side of said branch.

9. Suitcase (1) for motorcycles, or similar vehicles, as claimed in claims from 6 to 8, **characterized in that** said rotations useful to the opening of the suitcase is of about 45 degrees and said rotation useful to the releasing of the suitcase from the vehicle is of about 90 degrees.

10. Method of opening and/or release of a suitcase according to any of the preceding claims 1-5 from a vehicle by one key type security device **characterized by** the fact that it includes a phase of rotation of said key in one estabilished direction to open the suitcase, a phase of opposite rotation to release said suitcase from the vehicle, one of said phases being anticipated by a movement of the key in axial sense, only to distinguish the kind of operation to effect.

## Patentansprüche

1. Koffer (1) für Krafträder oder ähnliche Fahrzeuge, umfassend einen tieferliegenden festen Teil (3), einen höherliegenden bewegbaren Teil (4), der durch Gelenkeinrichtungen (5) an dem festen (3) gekoppelt ist, Sicherheitseinrichtungen vom Schlüsseltyp (11), die auf der gegenüberliegenden Seite der Gelenkeinrichtungen an dem festen Teil verbunden sind, und einen ersten Hebel (17) und einen zweiten Hebel (16), die als "L" geformt sind, die auf eine sich drehende Weise mit dem festen Teil (3) verbunden sind, **dadurch gekennzeichnet, dass** der erste Hebel (17) unter den Sicherheitseinrichtungen und der zweite Hebel (16) über den Sicherheitseinrichtungen (11) angeordnet ist, wobei jeder Hebel an einem Ende (24, 25) einen Haken umfasst, wobei der Haken des ersten Hebels (17) angepasst ist, um den Koffer mit einer Trageplatte (2) zur Anbringung zu verbinden, und der Haken des zweiten Hebels (16) angepasst ist, um den tieferliegenden festen Teil (3) mit einem Element (26) zu verbinden, das als Einheit mit dem höherliegenden bewegbaren Teil (4) ausgebildet ist, um den Koffer zu verschließen, wobei das andere Ende (14, 15) der Hebel durch elastische Einrichtungen (22, 23) mit einem Nocken (12) in Berührung gehalten wird, der als Einheit mit den Sicherheitseinrichtungen vom Schlüsseltyp ausgebildet ist, wobei sich der Nocken (12) von einer neutralen Position in zwei symmetrische entgegengesetzte Positionen dreht, die das Öffnen des höherliegenden Teils (4) des Koffers oder die Freigabe des Koffers von seiner Trageplatte (2) erzeugen können.

2. Koffer (1) für Krafträder oder ähnliche Fahrzeuge nach dem vorangehenden Anspruch, **dadurch gekennzeichnet, dass** die zwei Hebel (16, 17) auf eine Schwenkweise mit horizontalen Naben (18, 19) verbunden sind, wobei sich solche Naben auf einer entgegengesetzten Ebene in Bezug zum Formnocken (12) befinden und an ihren Enden durch Innenwände (20, 21) des festen Teils (3) des Koffers getragen werden.

3. Koffer (1) für Krafträder oder ähnliche Fahrzeuge nach Anspruch 1 oder 2, **dadurch gekennzeichnet, dass** der Formnocken (12) durch Schraubeneinrichtungen (13) an dem bewegbaren Teil der Sicherheitseinrichtungen (11) befestigt ist.

4. Koffer (1) für Krafträder oder ähnliche Fahrzeuge nach einem vorangehenden Anspruch, **gekennzeichnet durch** die Tatsache, dass der Haken des ersten Hebels (17) angepasst ist, um mit einem Profilhaken (9), der mit der Trageplatte (2) als Einheit ausgebildet ist, in Eingriff zu treten, wobei der Haken (9) in eine Öffnung (8) auf dem Boden des festen Teils (3) des Koffers einführbar ist.

5. Koffer (1) für Krafträder oder ähnliche Fahrzeuge nach einem vorangehenden Anspruch, **gekennzeichnet durch** die Tatsache, dass der Haken des zweiten Hebels (16) angepasst ist, um mit einem als "U" geformten Element (26), das innenliegend einteilig mit dem höherliegenden bewegbaren Teil (4) des Koffers ausgebildet ist, in Eingriff zu treten.

6. Koffer (1) für Krafträder oder ähnliche Fahrzeuge nach einem vorangehenden Anspruch, **gekennzeichnet durch** Umfassen eines mechanischen Anschlagelements, um eine von den Drehungen des Nockens (12') zu verhindern, wobei das Element **durch** Einrichtungen, die im Innern des Koffers angeordnet sind, in Eingriff genommen oder aus dem Eingriff gelöst wird.

7. Koffer (1) für Krafträder oder ähnliche Fahrzeuge nach Anspruch 6, **dadurch gekennzeichnet, dass** der mechanische Anschlag (31) angepasst ist, um die Drehung des Hebels (17') zu behindern, der dafür vorgesehen ist, mit der Platte 2 wechselzuwirken, die den Koffer mit dem Fahrzeug verbindet.

8. Koffer (1) für Krafträder oder ähnliche Fahrzeuge nach Anspruch 6 oder 7, **dadurch gekennzeichnet, dass** der mechanische Anschlag (31) eine vertikale Stange (30) umfasst, die um ihre Achse drehbar ist, wobei die Stange mit einer horizontalen Nase 31 versehen ist und zwischen zwei zueinander um einen Winkel von 90 Grad gedrehte Positionen von Hand verlagerbar ist, wobei eine der Positionen einem Beeinträchtigungszustand der Nase in Bezug zu einem horizontalen Schenkel 15' des Hebels 17' entspricht, wobei die Nase in Berührung mit der tieferliegenden Seite des Schenkels angeordnet ist.

9. Koffer (1) für Krafträder oder ähnliche Fahrzeuge nach den Ansprüchen von 6 bis 8, **dadurch gekennzeichnet, dass** die Drehung, die zum Öffnen des Koffers nützlich ist, etwa 45 Grad beträgt, und die Drehung, die zur Freigabe des Koffers vom Fahrzeug nützlich ist, etwa 90 Grad beträgt.

10. Verfahren zum Öffnen und/oder Freigeben eines Koffers nach einem der vorangehenden Ansprüche 1-5 von einem Fahrzeug durch eine Sicherheitsvorrichtung vom Schlüsseltyp, **gekennzeichnet durch** die Tatsache, dass es umfasst: eine Phase einer Drehung des Schlüssels in eine erstellte Richtung, um den Koffer zu öffnen, eine Phase einer entgegengesetzten. Drehung, um den Koffer vom Fahrzeug freizugeben, wobei eine der Phasen **durch** eine Bewegung des Schlüssels in axialer Richtung vorweggenommen wird, nur um die Art eines Betriebs, der zu bewerkstelligen ist, zu unterscheiden.

## Revendications

1. Mallette (1) pour motocycles ou véhicules similaires, comprenant une partie inférieure fixe (3), une partie supérieure mobile (4) reliée par une charnière (5) à la partie fixe (3), un moyen de sécurité du type à clé (11) monté sur ladite partie fixe sur le côté opposé à ladite charnière, et un premier levier (17) et un deuxième levier (16) en forme de « L » reliés d'une façon tournante à ladite partie fixe (3), **caractérisée en ce que** le premier levier (17) est situé au-dessous dudit moyen de sécurité et le deuxième levier (16) est situé au-dessus dudit moyen de sécurité (11), chaque levier comportant un crochet à une extrémité (24, 25), le crochet du premier levier (17) étant prévu pour connecter la mallette à une plaque de support (2) pour fixation, et le crochet du deuxième levier (16) étant prévu pour connecter la partie inférieure fixe (3) à un élément (26) solidaire de ladite partie supérieure mobile (4) pour fermeture de la mallette, l'autre extrémité (14, 15) desdits leviers étant maintenue en contact, par des moyens élastiques (22, 23), avec une came (12) solidaire dudit moyen de sécurité du type à clé, ladite came (12) tournant à partir d'une position neutre vers deux positions symétriquement opposées qui peuvent produire l'ouverture de la partie supérieure (4) de la mallette, ou la libération de la mallette par rapport à sa plaque de support (2).

2. Mallette (1) pour motocycles ou véhicules similaires selon la revendication précédente, **caractérisée en ce que** les deux leviers (16, 17) sont reliés, de façon tournante, à des moyeux horizontaux (18, 19), ces moyeux étant dans des plans opposés par rapport à la came profilée (12) et étant supportés à leurs extrémités par des parois intérieures (20, 21) de la partie fixe (3) de la mallette.

3. Mallette (1) pour motocycles ou véhicules similaires selon la revendication 1 ou 2, **caractérisée en ce que** ladite came profilée (12) est fixée à la partie mobile dudit moyen de sécurité (11) par une vis (13).

4. Mallette (1) pour motocycles ou véhicules similaires selon une quelconque des revendications précédentes, **caractérisée en ce que** le crochet du premier levier (17) est prévu pour venir en prise avec un crochet profilé (9) solidaire de ladite plaque de support (2), ledit crochet (9) pouvant être inséré dans un trou (8) à travers le fond de ladite partie fixe (3) de la mallette.

5. Mallette (1) pour motocycles ou véhicules similaires selon une quelconque des revendications précédentes, **caractérisée en ce que** le crochet du deuxième levier (16) est prévu pour venir en prise avec un élément (26) en forme de « U » qui est intérieurement solidaire de ladite partie supérieure mobile (4) de la mallette.

6. Mallette (1) pour motocycles ou véhicules similaires selon une quelconque des revendications précédentes, **caractérisée en ce qu'**elle comprend un élément de butée mécanique pour empêcher une des rotations de ladite came (12'), ledit élément étant en prise avec un moyen placé à l'intérieur de la mallette, ou étant dégagé de celui-ci.

7. Mallette (1) pour motocycles ou véhicules similaires selon la revendication 6, **caractérisée en ce que** ladite butée mécanique (31) est prévue pour empêcher la rotation dudit levier (17') qui coopére avec ladite plaque (2) pour fixer la mallette au véhicule.

8. Mallette (1) pour motocycles ou véhicules similaires selon la revendication 6 ou 7, **caractérisée en ce que** ladite butée mécanique (31) comprend une tige verticale (30) qui peut tourner autour de son axe, ladite tige comportant une patte horizontale (31) et étant déplaçable manuellement entre deux positions tournées l'une par rapport à l'autre d'un angle de 90 degrés, une desdites positions correspondant à une situation d'interférence de ladite patte par rapport à une branche horizontale (15') dudit levier (17'), ladite patte étant placée en contact avec le côté inférieur de ladite branche.

9. Mallette (1) pour motocycles ou véhicules similaires selon les revendications 6 à 8, **caractérisée en ce que** ladite rotation servant à l'ouverture de la mallette est de 45 degrés environ et ladite rotation servant à libérer la mallette du véhicule est de 90 degrés environ.

10. Procédé d'ouverture et/ou de libération d'une mallette selon une quelconque des revendications précédentes 1 à 5 d'un véhicule par un dispositif de sécurité du type à clé, **caractérisé en ce qu'**il comprend une phase de rotation de ladite clé dans une direction prédéterminée d'ouverture de la mallette, une phase de rotation opposée pour libérer ladite mallette du véhicule, une desdites phases étant précédée par un mouvement de la clé dans le sens axial, seulement pour distinguer le type d'opération à effectuer.
